# EUROPEAN PATENT APPLICATION

(11) **EP 3 550 041 A1**
(43) Date of publication of application: **09.10.2019**
(21) Application number: 17876799.2
(22) Date of filing: 15.11.2017
(51) Int. Cl.: C22B 59/00, C22B 3/26, C22B 3/42

(54) **ION EXCHANGE PROCESSING METHOD, AND SCANDIUM RECOVERY METHOD**

(30) Priority: 30.11.2016 JP 2016233268
(71) Applicant: Sumitomo Metal Mining Co., Ltd., Tokyo 105-8716 (JP)
(72) Inventor: OZAKI Yoshitomo, Niihama-shi Ehime 792-0002 (JP); NAGAI Hidemasa, Niihama-shi Ehime 792-0002 (JP); SHOJI Hirofumi, Niihama-shi Ehime 792-0002 (JP); HIGAKI Tatsuya, Niihama-shi Ehime 792-0002 (JP); MATSUMOTO Shin-ya, Niihama-shi Ehime 792-0002 (JP)
(74) Representative: Jones, Nicholas Andrew
(86) International application number: PCT/JP2017/041067
(87) International publication number: WO 2018/101039

(57) **Abstract**

Provided is a method capable of efficiently separating impurities and scandium from an acidic solution containing scandium and at least aluminum as impurities, to recover scandium with high purity. The ion exchange processing method according to the present invention comprises a first ion exchange step S21 for bringing an acidic solution containing scandium and at least aluminum as impurities, into contact with a chelating resin, a first elution step S22 for bringing the chelating resin with which the acidic solution has been brought into contact in the first ion exchange step S21, into contact with a first eluent to obtain an eluate, a second ion exchange step S23 for bringing the obtained eluate into contact with a chelating resin, and a second elution step S24 for bringing the chelating resin with which the eluate has been brought into contact in the second ion exchange step S23, into contact with a second eluent to obtain a scandium eluate containing scandium.

## Description

### TECHNICAL FIELD

The present invention relates to an ion exchange processing method, which is an ion exchange processing method capable of efficiently recovering scandium contained in an acidic solution with high purity using a chelating resin, and a scandium recovery method to which the ion exchange processing method is applied.

### BACKGROUND ART

Scandium is extremely useful as an additive for high strength alloys and as an electrode material for fuel cells. However, scandium has not been widely used because of a small amount of production and a high price thereof.

Incidentally, scandium is contained in nickel oxide ore such as laterite ore and limonite ore in a small amount. However, nickel oxide ore has not been industrially utilized as a nickel raw material for a long period of time since the grade of nickel contained therein is low. For this reason, it has also been rarely studied to industrially recover scandium from nickel oxide ore.

However, in recent years, a process based on high pressure acid leaching (HPAL) method is being put to practical use, in which nickel oxide ore is introduced into a pressure vessel together with sulfuric acid and heated and leached at a high temperature of about from 240°C to 260°C to separate the mixture into a leachate containing nickel and a leach residue. In this process, a neutralizing agent is added to the leachate obtained by the HPAL method to separate and remove the impurity components and then a sulfurizing agent is added to the solution from which the impurities have been removed to recover nickel as nickel sulfide. The nickel sulfide obtained by such a treatment is, for example, treated in an existing nickel metallurgy process to be converted into electric nickel or a nickel salt compound.

In the case of using a process (hereinafter referred to as "HPAL process") based on such a HPAL method, scandium, which has been contained in nickel oxide ore, is contained in the leachate together with nickel (see, for example, Patent Document 1), but scandium is contained in the acidic solution (post-sulfurization liquid) after the addition of a sulfurizing agent while nickel is recovered as a sulfide when the impurity components are separated and removed from the leachate obtained, then a sulfurizing agent is added to the leachate, and a sulfurization treatment to generate nickel sulfide is performed. Hence, nickel and scandium can be effectively separated from each other by performing the HPAL process.

Meanwhile, for example, as a method for recovering scandium from a scandium-containing acidic solution, such as a post-sulfurization liquid obtained through the HPAL process, for example, a method has been proposed in which scandium is adsorbed onto a chelating resin having an iminodiacetate salt as a functional group, separated from impurities, and concentrated (see, for example, Patent Documents 2 to 4). In addition, a method for recovering scandium from the acidic solution by solvent extraction has also been proposed (see, for example, Patent Document 5).

Specifically, Patent Document 5 discloses the following solvent extraction technique. In other words, it has been proposed that an organic solvent prepared by diluting 2-ethylhexylsulfonic acid-mono-2-ethylhexyl with kerosene is added to a scandium-containing solution of an aqueous phase containing at least one or more kinds among iron, aluminum, calcium, yttrium, manganese, chromium, and magnesium in addition to scandium, and the scandium component is extracted into the organic solvent. Subsequently, in order to separate yttrium, iron, manganese, chromium, magnesium, aluminum, and calcium which have been extracted into the organic solvent together with scandium, an aqueous solution of hydrochloric acid is added to the organic solvent, scrubbing is performed, and yttrium, iron, manganese, chromium, magnesium, aluminum, and calcium are thus removed. Thereafter, an aqueous solution of NaOH is added to the organic solvent to form a slurry containing Sc(OH)₃ converted from scandium remained in this organic solvent, the precipitate of Sc(OH)₃ obtained by filtration of this slurry is dissolved using hydrochloric acid to obtain an aqueous solution of scandium chloride, oxalic acid is added to this aqueous solution of scandium chloride to generate a precipitate of scandium oxalate, and this precipitate is calcined to obtain scandium oxide with high purity.

However, as described above, it is general that nickel oxide ore generally contains various impurity components in a great amount but contains the desired scandium only in a significantly small amount. Impurities such as iron, aluminum, and chromium are also adsorbed onto the chelating resin in a great amount by simply allowing the acidic solution obtained through the HPAL process using nickel oxide ore as a raw material to pass through the chelating resin in this manner.

The distribution coefficient of these impurity components adsorbed onto the chelating resin itself is smaller than that of scandium, but the amount adsorbed onto the resin cannot be ignored because of a great amount thereof. Hence, there is a problem that the amount of scandium adsorbed onto the chelating resin and the recovered amount, namely, recovery efficiency of scandium decrease in addition to the problem of quality by that amount.

In addition, Patent Document 6 discloses a process in which a chelating resin and solvent extraction are combined. This method provides a scandium recovery method for conveniently and efficiently recovering scandium with high purity from nickel oxide ore. Specifically, this scandium recovery method is a method in which a solution containing scandium is allowed to pass through an ion exchange resin, then the eluate eluted from the ion exchange resin is subjected to solvent extraction to be separated into a liquid extraction residue and a post-extraction extractant, then the liquid extraction residue obtained is subjected to the oxalate formation treatment to obtain a precipitate of scandium oxalate, and then the precipitate is roasted to obtain scandium oxide. Moreover, in this method, an amine-based extractant is used as an extractant to be used in the solvent extraction. According to such a method, it is possible to obtain highly pure scandium having a purity of more than 99.9%.

However, even when using these methods, there is still a problem that the amount of scandium adsorbed onto the chelating resin and the recovery efficiency of scandium decrease in addition to the problem of quality to be caused by a great amount of impurities. In particular, aluminum is often present in a greater amount than scandium and has the property of being easily adsorbed onto a chelating resin.
Patent Document 1: Japanese Unexamined Patent Application, Publication No. H03-173725
Patent Document 2: Japanese Unexamined Patent Application, Publication No. H01-133920
Patent Document 3: Japanese Unexamined Patent Application, Publication No. H09-176756
Patent Document 4: Japanese Unexamined Patent Application, Publication No. H09-194211
Patent Document 5: Japanese Unexamined Patent Application, Publication No. H09-291320
Patent Document 6: Japanese Unexamined Patent Application, Publication No. 2016-108664

### DISCLOSURE OF THE INVENTION

### Problems to be Solved by the Invention

The present invention has been proposed in view of such circumstances, and an object thereof is to provide an ion exchange processing method capable of efficiently separating impurities and scandium from a scandium-containing acidic solution and at least aluminum as impurities, to recover scandium with high purity, and a scandium recovery method to which the ion exchange processing method is applied.

### Means for Solving the Problems

The present inventors have intensively conducted investigations to solve the problems described above. It has been found out that it is possible to efficiently separate impurities including aluminum and scandium from each other and to recover scandium with high purity by performing ion exchange processing using a chelating resin in two stages, and the present invention has been thus completed.
(1) A first aspect of the present invention is an ion exchange processing method for separating scandium from an acidic solution containing scandium and at least aluminum as impurities, the method including a first ion exchange step for bringing the acidic solution into contact with a chelating resin, a first elution step for bringing the chelating resin, with which the acidic solution has been brought into contact in the first ion exchange step, into contact with a first eluent to obtain an eluate, a second ion exchange step for bringing the eluate obtained into contact with a chelating resin, and a second elution step for bringing the chelating resin, with which the eluate has been brought into contact in the second ion exchange step, into contact with a second eluent to obtain a scandium eluate containing scandium.
(2) A second aspect of the present invention is a scandium recovery method for recovering scandium from an acidic solution containing scandium and at least aluminum as impurities, the method including a treatment step including a first ion exchange step for bringing the acidic solution into contact with a chelating resin, a first elution step for bringing the chelating resin, with which the acidic solution has been brought into contact in the first ion exchange step, into contact with a first eluent to obtain an eluate, a second ion exchange step for bringing the eluate obtained into contact with a chelating resin, and a second elution step for bringing the chelating resin, with which the eluate has been brought into contact in the second ion exchange step, into contact with a second eluate to obtain a scandium eluate containing scandium.
(3) A third aspect of the present invention is the scandium recovery method according to the second aspect, further including an adjustment step for adjusting a pH and a redox potential of the eluate obtained in the first elution step by adding an alkali and a reducing agent to the eluate, in which the post-adjustment liquid obtained in the adjustment step is subjected to the second ion exchange step to be brought into contact with the chelating resin.
(4) A fourth aspect of the present invention is the scandium recovery method according to the second or third aspect, in which the first eluent to be brought into contact with the chelating resin is a sulfuric acid solution having a concentration of 0.3 N or more and less than 3 N in the first elution step.
(5) A fifth aspect of the present invention is the scandium recovery method according to any one of the second to fourth aspects, in which two kinds of sulfuric acid solutions having different concentrations are used as a second eluent, a first sulfuric acid solution having a concentration of 0.01 N or more and 0.1 N or less is brought into contact with the chelating resin to obtain an aluminum eluate containing aluminum, and the chelating resin after being subjected to an elution treatment using the first sulfuric acid solution is then brought into contact with a second sulfuric acid solution having a concentration of 0.3 N or more and 20 N or less to obtain a scandium eluate containing scandium in the second elution step.
(6) A sixth aspect of the present invention is the scandium recovery method according to the third aspect, in which amounts of alkali and reducing agent added to the eluate are adjusted so that a pH is in a range of 1.8 or more and 2.2 or less and a redox potential is in a range of from -80mV to - 120mV as a value measured using a silver/silver chloride electrode as a reference electrode in the adjustment step.
(7) A seventh aspect of the present invention is the scandium recovery method according to any one of the second to sixth aspects, in which the chelating resin is a chelating resin having iminodiacetic acid as a functional group.
(8) An eighth aspect of the present invention is the scandium recovery method according to any one of the second to seventh aspects, in which a sulfuric acid solution having a concentration of more than 3 N and 20 N or less is brought into contact with a chelating resin after being subjected to an elution treatment in the first elution step to remove chromium adsorbed on the chelating resin.
(9) A ninth aspect of the present invention is the scandium recovery method according to any one of the second to eighth aspects, in which the acidic solution is a post-sulfurization liquid obtained after subjecting a leachate obtained by high pressure acid leaching of nickel oxide ore to a neutralization treatment, adding a sulfurizing agent to the post-neutralization liquid obtained to generate a sulfide of nickel and/or cobalt, and separating the sulfide from the leachate.
(10) A tenth aspect of the present invention is the scandium recovery method according to any one of the second to ninth aspects, including a concentration step for generating a precipitate containing scandium from the scandium eluate obtained in the second elution step and dissolving the precipitate in an acid to obtain a scandium concentrate.
(11) An eleventh aspect of the present invention is the scandium recovery method according to the tenth aspect, including a solvent extraction step for bringing the scandium concentrate obtained in the concentration step into contact with an extractant for solvent extraction.
(12) A twelfth aspect of the present invention is the scandium recovery method according to the eleventh aspect, including a scandium oxide recovery step for adding a neutralizing agent or oxalic acid to the scandium-containing solution obtained in the solvent extraction step to generate a solid substance of scandium and heating the solid substance of scandium to obtain scandium oxide.

### Effects of the Invention

According to the present invention, it is possible to efficiently separate impurities and scandium from an acidic solution containing scandium and at least aluminum as impurities and to recover scandium with high purity.

### BRIEF DESCRIPTION OF THE DRAWINGS

Fig. 1 is a flowchart which illustrates an example of a scandium recovery method to which an ion exchange processing method is applied.
Fig. 2 is a flowchart which illustrates the flow of an ion exchange processing step.
Fig. 3 is a flowchart which illustrates the flow of a second elution step.

### PREFERRED MODE FOR CARRYING OUT THE INVENTION

Hereinafter, specific embodiments of the present invention will be described in detail, but the present invention is not limited to the following embodiments and can be appropriately modified within the scope of the object of the present invention. Incidentally, in the present specification, the notation "X to Y" (X and Y are arbitrary numerical values) means "X or more and Y or less".

### <<1. Outline>>

The present invention is an ion exchange processing method for separating scandium from an acidic solution containing scandium and at least aluminum as impurities.

Specifically, this ion exchange processing method includes a first ion exchange step for bringing an acidic solution containing scandium and impurities into contact with a chelating resin, a first elution step for bringing the chelating resin, with which the acidic solution has been brought into contact in the first ion exchange step, into contact with a first eluent to obtain an eluate, a second ion exchange step for bringing the eluate obtained into contact with a chelating resin; and a second elution step for bringing the chelating resin, with which the eluate has been brought into contact in the second ion exchange step, into contact with a second eluent to obtain a scandium eluate containing scandium.

In the ion exchange processing method according to the present invention, the eluate obtained by performing the first ion exchange step and then an elution treatment (first elution step) is subjected to ion exchange processing again in the second ion exchange step in this manner. In other words, the ion exchange processing using the chelating resin is performed in two stages.

Specifically, in the first ion exchange step, a treatment is performed in which scandium and aluminum and the like that are more likely to be adsorbed onto the chelating resin than scandium are preferentially adsorbed onto the chelating resin and a treatment is performed in which the scandium and aluminum and the like that are more likely to be adsorbed onto the chelating resin than scandium are separated from impurities which are not adsorbed onto the chelating resin or are less likely to be adsorbed onto the chelating resin than scandium other than those. Subsequently, the eluate obtained is subjected to the second ion exchange step to be brought into contact with the chelating resin again. In this manner, the eluate to be supplied to the second ion exchange step is once subjected to the adsorption and desorption operations using the chelating resin in the first ion exchange step and the first elution step, and thus the existing amount of impurities other than scandium is relatively smaller than the existing amount of impurities in the acidic solution subjected to the first ion exchange step. For this reason, the amount of scandium adsorbed onto the chelating resin in the second ion exchange step is more than the amount of scandium adsorbed onto the chelating resin in the first ion exchange step in distribution, and as a result, the amount of scandium recovered can be increased.

According to such a method, the impurity elements and scandium can be efficiently separated from each other even in a case in which impurities are present in a great amount in the scandium-containing acidic solution. In particular, scandium can be separated and recovered with high purity even in the case of an acidic solution containing aluminum as impurities.

Here, examples of the acidic solution which contains scandium and at least aluminum as impurities and is a target of treatment may include a solution to be obtained by subjecting a slurry of nickel oxide ore to a leaching treatment using sulfuric acid at a high temperature and a high pressure in a hydrometallurgical process of nickel oxide ore. Incidentally, examples of this solution may include a leachate to be obtained through a leaching treatment in a hydrometallurgical process and a post-sulfurization liquid obtained after a neutralization treatment is performed to remove impurity components from the leachate and a sulfide containing nickel and/or cobalt is recovered by adding a sulfurizing agent to the post-neutralization liquid obtained. These solutions are acidic solutions configured to contain an acid such as a sulfuric acid and are scandium-containing acidic solutions derived from nickel oxide ore.

According to the ion exchange processing method according to the present invention, a stable operation can be performed using a compact facility even in a case in which a raw material containing impurities in a great amount such as nickel oxide ore is the target in this manner.

### <<2. Scandium recovery method>>

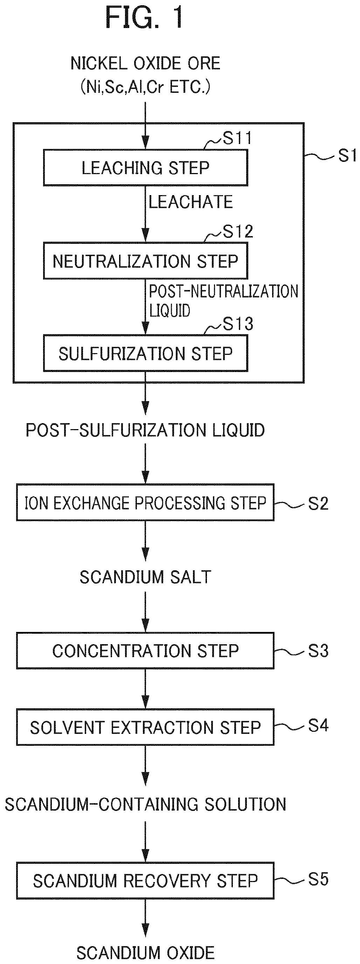

Fig. 1 is a flowchart which illustrates an example of a scandium recovery method to which the ion exchange processing method according to the present invention is applied and is a diagram which illustrates a method in which a post-sulfurization liquid obtained through the hydrometallurgical process of nickel oxide ore is used and the post-sulfurization liquid is subjected to a specific ion exchange processing and scandium is recovered from scandium eluate obtained as scandium oxide.

As illustrated in Fig. 1, the scandium recovery method includes a hydrometallurgical treatment step S1 for obtaining a post-sulfurization liquid which is a scandium-containing acidic solution through a hydrometallurgical process of nickel oxide ore, an ion exchange processing step S2 for obtaining a scandium eluate from which impurities have been separated by subjecting the post-sulfurization liquid obtained to ion exchange processing, a concentration step S3 for concentrating scandium from the scandium eluate, a solvent extraction step S4 for subjecting a solution in which scandium is concentrated to a solvent extraction treatment, and a scandium recovery step S5 for recovering scandium.

### <2-1. Hydrometallurgical treatment step>

Upon the recovery of scandium, it is possible to use a solution to be obtained through a hydrometallurgical process of nickel oxide ore such as an acidic solution to be obtained by leaching nickel oxide ore using sulfuric acid as a raw material. As to be described later, this scandium-containing acidic solution is a target solution for the ion exchange processing.

Specifically, as the scandium-containing acidic solution, it is possible to use a post-sulfurization liquid to be obtained by the hydrometallurgical treatment step S1 which includes a leaching step S11 for leaching nickel oxide ore using sulfuric acid at a high temperature and a high pressure and obtaining a leachate, a neutralization step S12 for adding a neutralizing agent to the leachate and obtaining a neutralization precipitate containing impurities and a post-neutralization liquid, and a sulfurization step S13 for adding a sulfurizing agent to the post-neutralization liquid and obtaining a nickel sulfide and a post-sulfurization liquid. Hereinafter, the flow of the hydrometallurgical treatment step S1 will be briefly described.

### (1) Leaching step

The leaching step S11 is a step of adding sulfuric acid to a slurry of nickel oxide ore and performing a stirring treatment at a temperature of from 240°C to 260°C using, for example, a high-temperature pressure vessel (autoclave) to form a leach slurry containing a leachate and a leach residue. Incidentally, the treatment in the leaching step S11 may be performed in accordance with the conventionally known HPAL process.

Here, examples of nickel oxide ore may mainly include so-called laterite ores such as limonite ore and saprolite ore. The content of nickel in laterite ore is usually from 0.8% to 2.5% by weight, and nickel is contained as a hydroxide or a silica magnesia (magnesium silicate) mineral. In addition, these nickel oxide ores contain scandium.

In the leaching step S11, the leach slurry which contains a leachate and a leach residue and is thus obtained is separated into a leachate containing nickel, cobalt, scandium, and the like and a leach residue which is hematite by solid-liquid separation while being washed. In this solid-liquid separation treatment, for example, the leach slurry is mixed with a washing liquid, and then the solid-liquid separation treatment can be performed by utilizing a solid-liquid separation facility such as a thickener using a coagulant to be supplied from a coagulant supply facility and the like.

### (2) Neutralization step

The neutralization step S12 is a step for adding a neutralizing agent to the leachate obtained to adjust the pH and obtaining a neutralization precipitate containing impurity elements and a post-neutralization liquid. By the neutralization treatment in this neutralization step S12, valuable metals such as nickel, cobalt, and scandium are contained in the post-neutralization liquid while most impurities including iron and aluminum are converted into a neutralization precipitate.

As the neutralizing agent, conventionally known ones can be used, and examples thereof may include calcium carbonate, slaked lime, and sodium hydroxide. Specifically, in the neutralization step S12, the pH is adjusted to a range of about from 1 to 4, more preferably to a range of from 1.5 to 2.5 by adding a neutralizing agent to the leachate. This makes is possible to efficiently remove the impurities as a neutralization precipitate.

### (3) Sulfurization step

The sulfurization step S13 is a step for adding a sulfurizing agent to the post-neutralization liquid obtained through the neutralization step S12 described above and obtaining nickel sulfide and a post-sulfurization liquid. By the sulfurization treatment in this sulfurization step S13, nickel, cobalt, zinc and the like are converted into sulfides and scandium is contained in the post-sulfurization liquid.

Specifically, in the sulfurization step S13, a sulfurizing agent such as gaseous hydrogen sulfide, sodium sulfide, or hydrogenated sodium sulfide is added to the post-neutralization liquid obtained and a sulfide (nickel·cobalt mixed sulfide) containing nickel and cobalt with less impurity components and a post-sulfurization liquid which has a low and stabilized level of nickel concentration and contains scandium are generated.

In the sulfurization treatment in the sulfurization step S13, the slurry of nickel·cobalt mixed sulfide is subjected to a settling separation treatment using a settling separation apparatus such as a thickener to separate and recover nickel·cobalt mixed sulfide from the bottom of the thickener. Meanwhile, the post-sulfurization liquid, which is an aqueous solution component, is recovered by being allowed to overflow.

The post-sulfurization liquid to be obtained through the respective steps in the hydrometallurgical treatment step S1 of nickel oxide ore as described above can be used as an acidic solution which contains scandium and other impurities, particularly aluminum and is a target of the scandium recovery treatment.

### <2-2. Ion exchange step>

As described above, a post-sulfurization liquid, which is a scandium-containing acidic solution and is obtained by leaching nickel oxide ore using sulfuric acid can be applied as a target solution of the scandium recovery treatment. However, the post-sulfurization liquid contains, for example, aluminum and chromium remaining in the solution without being sulfurized by the sulfurization treatment in the sulfurization step S13 described above and other impurities of various kinds and various forms in addition to scandium. For this reason, it is preferable to generate a scandium-containing solution in which scandium is concentrated by removing the impurities contained in the acidic solution in advance when recovering scandium from this acidic solution.

Specifically, in the present embodiment, a method by ion exchange processing using a chelating resin, the impurities such as aluminum contained in the acidic solution are separated and removed and a scandium-containing solution in which scandium is concentrated (ion exchange processing step S2) .

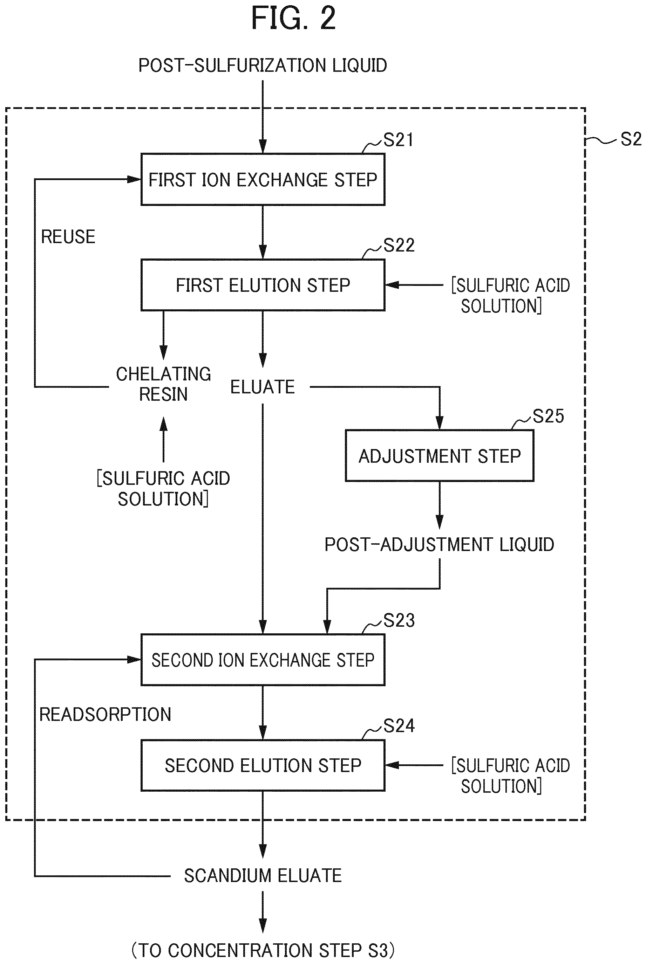

Fig. 2 is a flowchart which illustrates the flow of the ion exchange processing step S2 in present embodiment. As illustrated in Fig. 2, the ion exchange processing step S2 includes a first ion exchange step S21 for bringing a post-sulfurization liquid, which is a scandium-containing acidic solution, into contact with a chelating resin, a first elution step S22 for bringing the chelating resin, with which the post-sulfurization liquid has been brought into contact in the first ion exchange step S21, into contact with a first eluent to obtain an eluate, a second ion exchange step S23 for bringing the eluate obtained into contact with a chelating resin, and a second elution step S24 for bringing the chelating resin, with which the eluate has been brought into contact in the second ion exchange step S23, into contact with a second eluent to obtain a scandium eluate containing scandium.

In this manner, in the ion exchange processing step S2, scandium and other impurities, particularly aluminum, are efficiently separated from each other and scandium is concentrated by subjecting the post-sulfurization liquid to an ion exchange step in two stages.

### (1) First ion exchange step

The first ion exchange step S21 is an adsorption step for bringing the post-sulfurization liquid which is the target solution of the ion exchange processing into contact with a predetermined chelating resin and thus adsorbing scandium contained in the post-sulfurization liquid onto the chelating resin. In this first ion exchange step S21, a liquid passing treatment using a column may be performed or a batch treatment using a beaker and the like may be performed.

The kind of chelating resin is not particularly limited, and for example, a resin having iminodiacetic acid as a functional group can be used. A chelating resin having iminodiacetic acid as a functional group is preferable since scandium can be more efficiently adsorbed thereonto.

When the post-sulfurization liquid is allowed to pass through a chelating resin to adsorb scandium onto the chelating resin, the adsorption amount of impurities in the post-sulfurization liquid is smaller as the pH range of the solution is lower. For this reason, it is possible to suppress the adsorption of impurities onto the chelating resin by allowing a solution in a pH region as low as possible to pass through the chelating resin. However, when the pH of the solution is less than 2, not only the adsorption amount of impurities but also the adsorption amount of scandium decreases. For this reason, it is not preferable to allow a liquid in an extremely low pH region to pass through the resin for adsorption, and the lower limit value of pH is set to 2 or more.

Here, as impurities contained in the post-sulfurization liquid, aluminum tends to be more easily adsorbed onto the chelating resin than scandium of the target of recovery. For this reason, in the first ion exchange step S21, aluminum is also adsorbed onto the chelating resin together with scandium by allowing the post-sulfurization liquid to pass through the chelating resin. In addition, the post-sulfurization liquid also contains, for example, impurities such as chromium in addition to aluminum, and thus chromium is also adsorbed onto the chelating resin at a predetermined proportion in some cases.

### (2) First elution step

The first elution step S22 is an elution step for bringing the chelating resin, onto which scandium has been adsorbed by being brought into contact with the post-sulfurization liquid in the first ion exchange step S21, into contact with the first eluent to obtain an eluate. In the first elution step S22, not only scandium adsorbed onto the chelating resin but also aluminum is eluted at the same time while other impurity elements such as chromium remain in the state of being adsorbed onto the chelating resin.

Specifically, in the first elution step S22, it is preferable to use a sulfuric acid solution as the first eluent and it is more preferable to use a sulfuric acid solution of which the normality is maintained in a range of 0.3 N or more and less than 3 N. In addition, it is more preferable to use a sulfuric acid solution of which the normality is maintained in a range of 0.5 N or more and less than 2 N. In this manner, as elution is performed using a sulfuric acid solution at a predetermined concentration, it is possible to prevent elution of impurity elements, such as chromium as well as to efficiently elute scandium from this chelating resin.

With regard to the concentration of the sulfuric acid solution, there is the possibility that chromium adsorbed onto the chelating resin is also eluted and contained in the eluate when the normality of the sulfuric acid solution is 3 N or more. On the other hand, in the case of a sulfuric acid solution having a normality of less than 0.3 N, there is the possibility that the elution of scandium from the chelating resin is incomplete.

Next, the eluate obtained in the first elution step S22 is sent to the second ion exchange step S23 to be described later and subjected to ion exchange processing of the second stage.

Incidentally, the eluate obtained may be reused as an eluent for the chelating resin onto which scandium has been adsorbed using another chelating resin again by adjusting the concentration of the eluate by addition of sulfuric acid thereto and further adjusting the pH and the redox potential (ORP) if necessary. By doing this, the concentration of the eluate obtained can be increased.

### (3) Second ion exchange step

The second ion exchange step S23 is an adsorption step for bringing the eluate obtained in the first elution step S22 into contact with a predetermined chelating resin and thus adsorbing scandium contained in the eluate onto the chelating resin. In this manner, the second ion exchange step S23 is a step for performing ion exchange processing of the second stage, and scandium eluted in the eluate is adsorbed onto the chelating resin again.

The treatment in the second ion exchange step S23 may also be a liquid passing treatment using a column or a batch treatment using a beaker and the like in the same manner as the treatment in the first ion exchange step S21.

In addition, the kind of the chelating resin is not particularly limited and, for example, a resin having iminodiacetic acid as a functional group can be suitably used in the same manner as the chelating resin to be used in the first ion exchange step S21. Incidentally, as the chelating resin to be used in the second ion exchange step S23, the chelating resin used in the first ion exchange step S21 may be repeatedly used, but it is desirable to use an independent facility from an industrial standpoint when the time and effort for washing required to completely remove impurities from the chelating resin after being used, the washing time and the like are taken into consideration.

As described above, in the first elution step S22, aluminum is also eluted together with scandium adsorbed onto the chelating resin, and thus aluminum is also adsorbed onto the chelating resin together with scandium in this second ion exchange step S23. However, other impurity elements such as chromium other than aluminum have been almost removed through the first ion exchange step S21 and the first elution step S22, and thus scandium and aluminum are largely adsorbed onto the chelating resin in the second ion exchange step S23.

### (4) Second elution step

The second elution step S24 is an elution step for bringing the chelating resin, with which the eluate has been brought into contact in the second ion exchange step S23, into contact with a second eluent to obtain a scandium eluate containing scandium.

In this second elution step S24, stepwise elution treatments of elution of aluminum from the chelating resin and elution of scandium from the chelating resin are performed. Specifically, two kinds of sulfuric acid solutions having different concentrations are used as the second eluent, and aluminum and scandium are respectively eluted stepwise by the difference in concentration, and finally a scandium eluate in which only scandium is eluted is obtained.

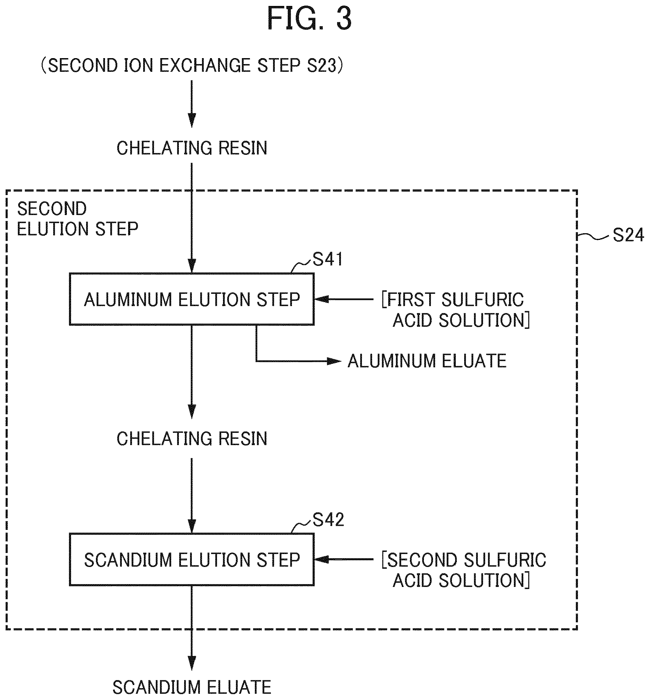

Fig. 3 is a flowchart which illustrates the flow of the second elution step S24. As illustrated in Fig. 3, the second elution step S24 includes an aluminum elution step S41 and a scandium elution step S42. Incidentally, the two kinds of sulfuric acid solutions which have different concentrations and are used as the second eluent are referred to as "first sulfuric acid solution" and "second sulfuric acid solution", respectively.

### (Aluminum elution step)

More specifically, in the second elution step S24, first, the first sulfuric acid solution having a concentration of 0.01 N or more and 0.1 N or less is brought into contact with the chelating resin to elute aluminum from the chelating resin and thus to obtain an aluminum eluate containing aluminum. Incidentally, the chelating resin to be the target of the elution treatment is a chelating resin obtained through the adsorption treatment in the second ion exchange step S23 and is a chelating resin onto which at least aluminum and scandium are adsorbed.

In the aluminum elution step, the elution treatment of aluminum from the chelating resin is performed using the first sulfuric acid solution having a concentration of 0.01 N or more and 0.1 N or less as described above. As this first sulfuric acid solution, a solution having a concentration of about 0.05 N is more preferably used. By using a sulfuric acid solution having a concentration in such a range as an eluate, it is possible to selectively elute aluminum adsorbed onto the chelating resin and to gradually remove the aluminum eluted into the eluate.

When aluminum is eluted and removed, the pH of the first sulfuric acid solution is maintained preferably in a range of 1.0 or more and 2.5 or less and more preferably in a range of 1.5 or more and 2.0 or less. There is the possibility that not only aluminum but also scandium is eluted from the chelating resin when the pH of the solution is less than 1. On the other hand, there is the possibility that aluminum is not properly eluted from the chelating resin when the pH is more than 2.5. Incidentally, there is a case in which the aluminum eluate obtained by such an elution treatment of the first stage also contains scandium in a slight amount. In such a case, scandium can be recovered without loss by performing separate neutralization to precipitate aluminum, performing solid-liquid separation, and mixing the post-neutralization liquid containing scandium with the post-sulfurization liquid and the like again.

### (Scandium elution step)

In the second elution step S24, next, the second sulfuric acid solution having a concentration of 0.3 N or more and 20 N or less is brought into contact with the chelating resin, namely, the chelating resin subjected to the aluminum elution step to elute scandium from the chelating resin and thus to obtain a scandium eluate containing scandium. Incidentally, this step is also referred to as the "scandium elution step."

In the scandium elution step, the elution treatment of scandium from the chelating resin is performed using the second sulfuric acid solution having a concentration of 0.3 N or more and 20 N or less as described above. There is the possibility that scandium is not eluted from the chelating resin when the concentration of the sulfuric acid solution is less than 0.3 N. On the other hand, when the concentration is more than 20 N, the effect of eluting scandium is not further improved but the degradation of chelating resin is rather accelerated by an increase in the concentration, it is impossible to repeatedly use the chelating resin, and the cost required for replacement of the chelating resin increases. In addition, it is required to handle a sulfuric acid solution having a high concentration and a problem of handling safety is also caused.

By performing the two-stage elution treatment in the manner described above, it is possible to effectively separate aluminum and to obtain a scandium eluate containing only scandium.

### (Reuse of eluate as eluent)

The aluminum eluate obtained in the aluminum elution step and the scandium eluate obtained in the scandium elution step may be reused as an eluent (first sulfuric acid solution) for eluting aluminum or an eluent (second sulfuric acid solution) for eluting scandium by adjusting the acid concentration, pH, and ORP thereof. By doing this, the concentration of the eluate obtained, particularly scandium eluate can be increased.

### (Readsorption onto chelating resin using scandium eluate)

In addition, although it is not an essential mode, the pH and the like of the scandium eluate obtained may be adjusted to obtain a post-adjustment liquid and the post-adjustment liquid may be transferred to the second ion exchange step S23 and repeatedly subjected to the adsorption (readsorption) treatment onto the chelating resin as illustrated in Fig. 2. It is possible to increase the grade of the recoverable scandium and to improve the quality of scandium as adsorption onto the chelating resin is performed again using such a post-adjustment liquid, and then a scandium eluate is obtained through the aluminum elution step and the scandium elution step. In addition, it is also possible to decrease the cost of chemical agent and facility scale.

Specifically, for example, a neutralizing agent is added to the scandium eluate obtained to adjust the pH to a range of 2 or more and 4 or less and preferably to a range of 2.7 or more and 3.3 or less taking pH 3 as the center. Subsequently, a reducing agent is added to the scandium eluate and sulfuric acid is further added to the scandium eluate to adjust the pH to a range of 1 or more and 2.5 or less and preferably to a range of from 1.7 to 2.3 taking pH 2 as the center. The post-adjustment liquid which is a scandium eluate adjusted is obtained by this. Thereafter, the post-adjustment liquid of which the pH and the like have been adjusted is supplied to the second ion exchange step S23 and subjected to the adsorption treatment onto the chelating resin. In other words, scandium is readsorbed onto the chelating resin using the post-adjustment liquid. Thereafter, as described above, the aluminum elution step for performing an elution treatment from the chelating resin using the first sulfuric acid solution and the scandium elution step for the chelating resin using the second sulfuric acid solution are repeatedly carried out.

The neutralizing agent is not particularly limited, and conventionally known ones can be used, and examples thereof may include calcium carbonate. In addition, the reducing agent is also not particularly limited, and conventionally known ones can be used, and examples thereof may include a sulfurizing agent such as hydrogen sulfide or sodium sulfide, gaseous sulfur dioxide, and hydrazine.

When adjusting the scandium eluate, it is preferable to add a reducing agent to the scandium eluate so that, for example, the redox potential (ORP) of the solution is adjusted and maintained in a range of more than 200 mV and 300 mV or less as a value measured using a silver/silver chloride electrode as a reference electrode. When ORP is 200 mV or less, for example, a sulfur component derived from the sulfurizing agent added as a reducing agent precipitates as a fine solid, causes clogging of the filter cloth at the time of a filtration treatment, and thus causes a decrease in productivity. In addition, the fine solid of sulfur component causes clogging or deflection of liquid flow in the column filled with the chelating resin and thus causes ununiform liquid passing and the like when the solution is allowed to repass through the chelating resin as well. On the other hand, when ORP is more than 300 mV, there is the possibility that residual iron ions and the like are adsorbed onto the chelating resin and thus inhibit the adsorption of scandium.

As the chelating resin when performing readsorption onto the chelating resin using the scandium eluate (post-adjustment liquid) adjusted, one that has already been used may be reused or a new chelating resin may be used. However, it is preferable to reuse the chelating resin from which even the residual impurities have been eluted using a sulfuric acid solution having a high concentration of 3 N or more when eluting scandium or to use a new chelating resin from the viewpoint of preventing the contamination with impurities.

It is possible to further decrease the impurities contained in the scandium eluate and to increase the concentration of scandium by adsorbing scandium onto the chelating resin by allowing the scandium eluate obtained to pass through the same kind of chelating resin again and then performing the elution treatment using a sulfuric acid solution (second sulfuric acid solution) having the same concentration as that used in the scandium elution step S42 in this manner.

Incidentally, it is possible to increase the concentration of scandium recovered by repeating such adsorption and elution of scandium in great numbers. However, the degree of increase in the concentration of scandium recovered decreases for the cost and the time and effort of treatment even when the adsorption and elution of scandium are excessively repeated. For this reason, it is preferable to set the number of repetitions to roughly 8 times or less from an industrial standpoint.

### (5) Adjustment step

Here, although the step in the ion exchange processing step S2 returns, an adjustment step S25 may be provided in which the pH and redox potential (ORP) are adjusted to predetermined ranges by adding an alkali and a reducing agent to the eluate obtained in the first elution step S22 as illustrated in Fig. 2.

Specifically, in the adjustment step S25, the pH of the eluate is adjusted to a range of from 1.8 to 2.2 and the ORP is adjusted to a range of from (minus) -80 mV to -120 mV as a value measured using a silver/silver chloride electrode as a reference electrode by adding an alkali and a reducing agent to the eluate obtained by eluting scandium through the first elution step S22. By such adjustment, it is possible to reduce trivalent iron ions which are more likely to be adsorbed onto the chelating resin than scandium ions contained in the solution into the form of divalent iron ions and to facilitate the adsorption of scandium ions onto the chelating resin in the second ion exchange step S23.

It is possible to increase the adsorption efficiency of scandium contained in the post-adjustment liquid onto the chelating resin by adjusting the pH and ORP of the eluate to predetermined ranges, thus obtaining a post-adjustment liquid, supplying the post-adjustment liquid to the second ion exchange step S23, and performing the adsorption treatment using the chelating resin in this manner.

The alkali is not particularly limited, and for example, calcium carbonate, calcium hydroxide, sodium hydroxide, potassium hydroxide, and ammonia can be used. In addition, the reducing agent is not particularly limited, and hydrogen sulfide, sodium hydroxide, sodium sulfide and the like can be used.

Incidentally, as illustrated in Fig. 2, the eluate obtained through the first elution step S22 may be supplied to the second ion exchange step S23 as it is or may be supplied as a post-adjustment liquid obtained by adjusting the eluate to have predetermined conditions in the adjustment step S25 as described above.

### (6) Removal of impurities from chelating resin

### (Removal of chrome)

In addition, in the first ion exchange step S21, chromium, as an impurity element, is adsorbed onto the chelating resin in addition to scandium and aluminum. As described above, the chromium adsorbed onto the chelating resin remains on the chelating resin without being eluted in the elution treatment in the first elution step S22. Incidentally, this makes it possible to efficiently separate chromium from scandium.

It is preferable to remove chromium adsorbed onto the chelating resin and to recover the adsorption capacity of the chelating resin by bringing a predetermined sulfuric acid solution into contact with the chelating resin from which scandium has been eluted but onto which chromium is still adsorbed.

Specifically, the chromium adsorbed onto the chelating resin is removed by bringing a sulfuric acid solution having a concentration of 3 N or more into contact with the chelating resin from which scandium has been eluted. It is not preferable that the concentration of sulfuric acid solution is less than 3 N since chromium adsorbed is not properly removed from the chelating resin. On the other hand, the upper limit of the concentration of the sulfuric acid solution is not particularly limited, but the effect of removing chromium is not further improved even when a sulfuric acid solution having an excessively high concentration is used, the degradation of chelating resin is rather accelerated as the concentration increases, and this leads to an increase in the cost required for replacement of the chelating resin. In addition, it is required to handle a sulfuric acid solution having a high concentration and a problem of handling safety is caused. For these reasons, it is preferable to set the concentration of the sulfuric acid solution to be used to 20 N or less.

The adsorption capacity of the chelating resin from which chromium has been removed is recovered in this manner and can be reused as the chelating resin to be used in the first ion exchange step S21. This eliminates the need to prepare a new chelating resin and enables an efficient treatment.

### (Iron removal step)

In addition, the post-sulfurization liquid obtained by subjecting nickel oxide ore to a hydrometallurgical treatment contains iron as impurities in some cases. In such a case, it is preferable to bring a sulfuric acid solution into contact with the chelating resin after being subjected to the adsorption treatment and to remove iron adsorbed onto the chelating resin prior to elution of scandium and aluminum adsorbed onto the chelating resin in the first ion exchange step S21 in the first elution step S22.

Specifically, as the sulfuric acid solution to be used to remove iron, it is preferable to use one having a lower normality than the sulfuric acid solution to be used in the first elution step S22 and a pH in a range of about 1 or more and 3 or less. This makes it possible to selectively remove iron from the chelating resin. There is a case in which not only iron but also scandium is removed from the chelating resin when using a sulfuric acid solution having a high concentration so that the pH of the sulfuric acid solution is less than 1. In addition, there is a case in which iron remains without being properly removed from the chelating resin when using a dilute sulfuric acid solution so as to have a pH of more than 3.

### <2-3. Concentration step>

The concentration step S3 is a step for separating the impurity components contained in the scandium eluate obtained through the ion exchange processing step S2 from scandium and concentrating scandium.

Specifically, a scandium concentrate from which impurities have been separated and removed is generated by separating scandium from impurities by generating a precipitate of scandium contained in the scandium eluate and further dissolving the precipitate of scandium obtained in a solution of an acid such as sulfuric acid or hydrochloric acid. Incidentally, the scandium concentrate thus obtained is subjected to the treatment as an extraction starting liquid in the solvent extraction step S4 of the subsequent step.

The concentration method is not particularly limited, and, for example, any of hydroxylation neutralization, oxalate formation, or both of hydroxylation neutralization and oxalate formation may be adopted. In addition, when dissolving the precipitate of scandium generated by these methods, it is preferable to dissolve the precipitate in the vicinity of the solubility thereof. By dissolving the precipitate obtained in the vicinity of the solubility thereof, a solid can be precipitated once and redissolved at an arbitrary concentration and the concentration of scandium can be thus arbitrarily selected and increased. This is an industrially extremely preferable mode from the viewpoint of being able to decrease the liquid amount in the solvent extraction step S4 of the subsequent step, and further, the facility scale.

Incidentally, as an acid solution to be used when dissolving the precipitate of scandium, either of hydrochloric acid or sulfuric acid may be used but it is preferable to use a sulfuric acid solution from the viewpoint of cost and handling.

### (Hydroxylation neutralization)

For example, in the treatment of hydroxylation neutralization, a precipitate of scandium (scandium hydroxide) is generated by adding a neutralizing agent to the scandium eluate obtained and the precipitate is recovered by solid-liquid separation. Subsequently, an acidic solution in which scandium is dissolved is obtained by adding a solution of an acid such as sulfuric acid or hydrochloric acid to the precipitate of scandium recovered and dissolving the precipitate in the acid solution.

The neutralizing agent is not particularly limited, conventionally known ones can be used, and examples thereof may include calcium carbonate, slaked lime, and sodium hydroxide. Among these, in a case in which the scandium eluate is a sulfuric acid solution, gypsum is generated when a neutralizing agent containing a calcium component is used. In that case, it is preferable to use sodium hydroxide and the like as a neutralizing agent.

In the treatment of hydroxylation neutralization, it is preferable to set the pH of solution to a range of 8 or more and 9 or less by adding a neutralizing agent to the scandium eluate. There is the possibility that neutralization insufficiently proceeds and scandium cannot be sufficiently recovered when the pH is less than 8. On the other hand, the cost increases since the amount of neutralizing agent used increases when the pH is more than 9.

### (Oxalate formation)

In addition, in the treatment of oxalate formation, crystals of scandium oxalate are generated by adding oxalic acid to the scandium eluate obtained. Subsequently, an acidic solution in which scandium is dissolved is obtained by adding a solution of an acid such as sulfuric acid or hydrochloric acid to the scandium oxalate precipitate recovered and dissolving the crystals in the acid solution.

In the treatment of oxalate formation, the pH condition at the time of crystal generation of scandium oxalate is preferably 0 or more and 0.5 or less. There is the possibility that the solubility of oxalate salt of scandium increases, an oxalate salt of scandium redissolves in the acid solution, and the recovery rate of scandium thus decreases when the pH is too low. On the other hand, there is the possibility that precipitates of impurities contained in the scandium eluate are generated together with the crystals of scandium oxalate and thus decrease the purity of scandium when the pH is too high.

The amount of oxalic acid added is not particularly limited but is preferably 1.05 times or more and 1.2 times or less the equivalent required to precipitate scandium as an oxalate. There is the possibility that the entire amount of scandium cannot be recovered when the amount of oxalic acid added is less than 1.05 times the equivalent required. On the other hand, there is the possibility that the solubility of scandium oxalate increases, scandium redissolves in the acid solution, and the recovery rate of scandium thus decreases when the amount of oxalic acid added is more than 1.2 times the equivalent required.

### (Concurrent use of hydroxylation neutralization and oxalate formation)

In addition, in the combined treatment of both hydroxylation neutralization and oxalate formation, first, a precipitate containing scandium hydroxide is generated by subjecting the scandium eluate obtained to the treatment of hydroxylation neutralization. Next, crystals of scandium oxalate are generated by adding a solution of an acid such as hydrochloric acid to the precipitate generated, redissolving the precipitate in the acid solution, and adding oxalic acid to the redissolution solution obtained. Thereafter, an acidic solution in which scandium is dissolved is obtained by adding a solution of an acid such as sulfuric acid or hydrochloric acid to the crystals of scandium oxalate obtained and dissolving the crystals in the acid solution.

Incidentally, as the conditions in the respective treatment stages of the hydroxylation neutralization and the oxalate formation, conditions the same as those described above can be adopted.

As described above, by providing the concentration step S3 for concentrating scandium, it is possible to greatly remove impurities contained in the scandium eluate and to effectively diminish, for example, the number of steps according to the solvent extraction step S4. In addition, it is possible to arbitrarily adjust the concentration of the extraction starting liquid to be subjected to the solvent extraction step S4, thus to cut down the facility investment by a decrease in the facility scale to be used for the extraction treatment, and to stabilize the operation by stabilization of the concentration of starting liquid.

### <2-4. Solvent extraction step>

In the solvent extraction step S4, a solvent extraction treatment is performed by bringing the scandium-dissolved solution in which scandium is concentrated through the concentration step S3 as the extraction starting liquid into contact with a predetermined extractant.

The mode of the solvent extraction treatment is not particularly limited, but examples thereof may include a treatment which includes an extraction step for mixing scandium-dissolved solution eluate which is an extraction starting liquid with an extractant which is an organic solvent and separating the mixture into a post-extraction organic solvent into which scandium has been extracted and a liquid extraction residue, a scrubbing step for mixing a hydrochloric acid solution or a sulfuric acid solution with the post-extraction organic solvent, separating impurities from the post-extraction organic solvent, and obtaining a post-washing organic solvent, and a backward extraction step for adding a backward extractant to the post-washing organic solvent, backward extracting scandium from the post-washing organic solvent, and obtaining a backward extract. By performing such a solvent extraction treatment, it is possible to even further increase the purity of scandium contained in the scandium-dissolved solution.

### [Extraction step]

In the extraction step, the scandium-dissolved solution which is an extraction starting liquid and an organic solvent containing an extractant are mixed together to selectively extract scandium into the organic solvent.

The extractant is not particularly limited, and there are various kinds of extractants, but from the viewpoint of selectivity for scandium, it is preferable to use an acidic extractant containing phosphorus, specifically, di-2-ethylhexyl phosphoric acid (D2EHPA), 2-ethylhexylsulfonic acid-mono-2-ethylhexyl (2-ethylhexy 2-ethylhexyl phosphoric acid) (trade name: PC-88A, manufactured by DAIHACHI CHEMICAL INDUSTRY CO., LTD.) and the like.

In addition, an amine-based extractant as presented in Patent Document 6 can also be used although the extraction behavior thereof is different from that of an acidic extractant described above. In the extraction treatment using an amine-based extractant, the impurity components are extracted into the organic solvent containing the extractant and scandium is transferred into the liquid extraction residue. In this case, scandium can be effectively recovered by subjecting the liquid extraction residue obtained to the scandium recovery step S5 to be described later.

It is preferable that the extractant is used after being diluted with, for example, a hydrocarbon-based organic solvent. For example, the concentration of the extractant in the organic solvent is not particularly limited but is set to preferably 10% by volume or more and 30% by volume or less and more preferably 15% by volume or more and 25% by volume or less so as to be about 20% by volume when the phase separation property and the like at the time of extraction and backward extraction are taken into consideration.

In addition, in the extraction treatment, as the volume proportion of the organic solvent containing an extractant to the extraction starting liquid, it is preferable to set the molar quantity of the organic solvent with respect to the molar quantity of metal in the extraction starting liquid to, for example, 0.4 time or more and 1.0 time or less.

### [Scrubbing (washing) step]

In a case in which impurity elements other than scandium coexist in the organic solvent into which scandium has been extracted, it is preferable to subject the organic solvent (organic phase) to a scrubbing (washing) treatment before backward extracting the extraction liquid in the subsequent backward extraction step so that the impurity elements are separated into the aqueous phase and removed from the extractant.

As the solution (washing solution) to be used in scrubbing, a hydrochloric acid solution or a sulfuric acid solution can be used. For example, it is preferable to use a hydrochloric acid solution having a concentration range of 5.0 mol/L or more and 7.0 mol/L or less. In a case in which the extractant is D2EHPA, it is preferable to disperse a sulfuric acid solution having a concentration range of 2.5 mol/L or more and 3.5 mol/L or less. In a case in which the extractant is PC-88A, it is preferable to disperse a sulfuric acid solution having a concentration range of 2.0 mol/L or more and 5.0 mol/L or less. Incidentally, the extractant is not limited to the use of an acidic extractant such as D2EHPA or PC-88A as described above.

The number of washing stages (number of washing times) also depends on the kind and concentration of the impurity elements and it can be thus appropriately changed depending on the extractant and extraction conditions in a case in which the phase ratio O/A of the organic phase (O) to the aqueous phase (A) is set to 1. However, almost all elements can be separated to a concentration less than the lower analysis limit when the number of stages is from three to eight stages.

### [Backward extraction step]

In the backward extraction step, scandium is backward extracted from the organic solvent into which scandium has been extracted. This backward extraction step is a step for mixing the organic solvent with a backward extraction solution (backward extraction starting liquid) and advancing a reaction reverse to that at the time of extraction.

For example, in the case of using an acidic extractant as an extractant, it is required to cleave the bond of scandium contained in the organic solvent using an alkali in order to separate scandium from the organic solvent. For this reason, it is preferable to use a strong alkaline solution including sodium hydroxide as the backward extraction solution (backward extraction starting liquid).

In a case in which backward extraction treatment has been performed using an alkali, the product is a mixture of a solid of scandium hydroxide and a liquid phase containing the organic solvent and an alkaline post-backward extraction liquid and is in the form of a slurry. Hence, in the backward extraction step, the product is first filtered to separate the solid of scandium hydroxide from the liquid phase. Subsequently, an acid is added to the liquid phase and the liquid phase is separated into an organic phase and an aqueous phase. The solid of scandium hydroxide obtained through these steps is supplied to the subsequent step as a backward extract. Incidentally, it is preferable to wash the solid of scandium hydroxide in a case in which attachment of the organic phase to this solid is observed.

### <2-5. Scandium recovery step>

The scandium recovery step S5 is a step for recovering scandium in the form of scandium oxide using the scandium salt recovered through the solvent extraction step S4.

Specifically, scandium oxide is generated by performing a roasting treatment to roast the solid scandium salt obtained by the treatment in the solvent extraction step S4 and scandium is recovered in this form of oxide. As described above, when an extraction treatment using an acidic extractant is performed in the solvent extraction step S4, a precipitate of scandium hydroxide can be obtained through the backward extraction treatment. For this reason, a solid of scandium oxide can be obtained by firing solid scandium hydroxide obtained as it is.

However, there is the possibility that solid scandium hydroxide obtained by the backward extraction treatment may still contains impurities, and it is thus preferable to perform a precipitation treatment (scandium precipitation step) to dissolve scandium hydroxide recovered in a solution of an acid such as hydrochloric acid, then to add oxalic acid to the solution, and this to convert scandium into scandium oxalate before performing a roasting treatment in order to further increase the purity of scandium. Thereafter, scandium oxalate obtained is subjected to a roasting treatment (roasting step), whereby scandium oxide with high purity can be obtained.

### [Scandium precipitation step]

Specifically, the scandium precipitation step is a step for neutralizing the scandium salt obtained as a backward extract through the solvent extraction step S4 using an acid solution, further adding oxalic acid to the scandium-dissolved solution obtained, and thus precipitating and settling scandium as a solid of scandium oxalate.

The pH condition when dissolving the scandium salt using an acid solution is not particularly limited but is preferably 0 or more and 0.5 or less. There is the possibility that the solubility of scandium oxalate increases and the recovery rate of scandium decreases when the pH is less than 0 to be too low. On the other hand, there is the possibility that precipitates of impurities are generated in the dissolution solution to be obtained and the purity of scandium to be recovered thereafter decreases when the pH is more than 0.5.

The amount of oxalic acid added to the dissolution solution in which scandium is dissolved is not particularly limited but is preferably set to be 1.05 times or more and 1.2 times or less the equivalent required to precipitate scandium as an oxalate.

### [Roasting step]

The roasting step is a step for washing the precipitate of scandium oxalate obtained in the scandium precipitation step with water, drying the precipitate washed, and roasting the precipitate dried. Scandium having an extremely high grade can be recovered in the form of scandium oxide by performing this roasting step.

The conditions for roasting are not particularly limited, and for example, roasting can be performed by placing the precipitate of scandium oxalate dried in a tubular furnace and heating the precipitate at about 900°C for about 2 hours. It is preferable to use a continuous furnace such as a rotary kiln from an industrial standpoint since drying and firing (roasting) can be performed using the same apparatus.

### EXAMPLES

Hereinafter, the present invention will be more specifically described with reference to Examples, but the present invention is not limited to the following Examples at all.

### [Example 1]

Scandium was recovered using a post-sulfurization liquid obtained through a hydrometallurgical process of nickel oxide ore.

### <Hydrometallurgical step>

### (Leaching step)

A slurry of nickel oxide ore was charged into a pressure reaction vessel (autoclave) together with concentrated sulfuric acid and treated for 1 hour under a condition of 245°C to leach valuable metals such as scandium and nickel. Thereafter, the slurry obtained by this leaching treatment was subjected to solid-liquid separation to obtain a leachate containing various kinds of valuable metals and a leach residue.

### (Neutralization step)

Next, calcium carbonate was added to the leachate obtained, the pH was thus adjusted, and the neutralization step was performed. Thereafter, the slurry obtained was subjected to solid-liquid separation to obtain a neutralization precipitate and a post-neutralization liquid. Incidentally, the valuable metals such as scandium and nickel were contained in the post-neutralization liquid.

### (Sulfurization step)

Next, gaseous hydrogen sulfide was blown into the post-neutralization liquid obtained to precipitate nickel, cobalt, and zinc as sulfides. The sulfides generated were recovered by solid-liquid separation while a post-sulfurization liquid (acidic solution) was obtained as a solution after separation of the sulfides. Incidentally, the post-sulfurization liquid contained scandium.

### <Ion exchange processing step>

Next, ion exchange processing was performed to adsorb scandium to a chelating resin by bringing the post-sulfurization liquid obtained into contact with the chelating resin.

### (First ion exchange step)

First, calcium carbonate as a neutralizing agent and sodium hydroxide as a reducing agent were added to the post-sulfurization liquid obtained to adjust the pH to 1.8 and the redox potential (ORP) to -100 mV (reference electrode: silver/silver chloride electrode). The adjustments of pH and ORP were both simultaneously performed in parallel, and both the pH and ORP were adjusted so as to be in the intended ranges.

In addition, in order to clarify the behavior of elements which were not contained in the solution after the adjustment or were contained at significantly low contents even if contained, reagents for some elements were added to the solution to obtain an adsorption starting liquid having the composition presented in the following Table 1. Incidentally, as presented in Table 1, the abundance ratio (denoted as "M/Sc ratio" in the table) obtained by dividing the concentration of each element (denoted as "M" in the table) by the concentration of scandium is 2990/20.8 = 144 for aluminum, which is much higher than that for scandium.

**[Table 1]**

| | Sc | Al | Fe | Ni | Mg | Mn | Cr | Ca | Co |
|---|---|---|---|---|---|---|---|---|---|
| Adsorption starting liquid | 20.8 | 2990 | 1820 | 60.9 | 7160 | 3040 | 71.3 | 666 | 18.1 |
| Post-adsorption liquid | 7.1 | 2780 | 1760 | 46.6 | 6940 | 2930 | 46.3 | 642 | 16.0 |
| M/Sc ratio in starting liquid | 1 | 144 | 88 | 3 | 344 | 146 | 3 | 32 | 1 |

| | | | | | | | | | |
|---|---|---|---|---|---|---|---|---|---|
| ( 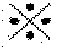 Unit is "mg/L") ( 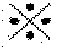 "M/Sc" denotes the concentration ratio to scandium) | | | | | | | | | |

Thereafter, the adsorption starting liquid (source liquid) having the composition presented in Table 1 was placed in a beaker together with a chelating resin having iminodiacetic acid as a functional group (trade name: DIAION CR11, manufactured by Mitsubishi Chemical Corporation) and these were brought into contact with each other for 30 minutes while being stirred to perform ion exchange processing. Incidentally, the amount of resin was 90 ml, and the amount of adsorption starting liquid was 1350 ml (BV = 15 equivalent). In addition, the reaction temperature was set to 60°C.

After the ion exchange processing, the chelating resin and the liquid after adsorption (post-adsorption liquid) were separated from each other by filtration. The post-adsorption liquid was partially sampled and analyzed by ICP. The ICP analysis results for the post-adsorption liquid are also presented in Table 1 above. As presented in Table 1, it can be seen that the concentration of scandium in the post-adsorption liquid has decreased, that is, scandium has been adsorbed onto the chelating resin.

### (First elution step)

Next, the chelating resin after being subjected to filtration was quickly washed with pure water to remove the post-adsorption liquid attached to the surface. Thereafter, 13 ml of the chelating resin after being subjected to washing and 53 ml of 2 N sulfuric acid solution as an eluate were placed in a beaker and mixed together, and the mixture was stirred for 30 minutes to perform an elution treatment. After stirring, the chelating resin and the sulfuric acid solution were separated from each other by filtration. The sulfuric acid solution (eluate) was partially sampled and analyzed by ICP.

Furthermore, 11 ml of the chelating resin recovered and 46 ml of sulfuric acid solution having a concentration of 2 N as an eluate were again mixed together in a beaker so that the mixing ratio of solution to resin was properly controlled, and stirred for 30 minutes to perform a second elution treatment. Incidentally, the reaction temperature was set to room temperature. Thereafter, the chelating resin and the sulfuric acid solution were separated from each other by filtration. The sulfuric acid solution (eluate) was partially sampled and analyzed by ICP.

The compositions of the eluate obtained in the first elution treatment and the eluate obtained in the second elution treatment are presented in the following Table 2. In addition, the measurement results on the adsorption rate in the first ion exchange step and the elution rate in the elution step are collectively presented in the following Table 3.

**[Table 2]**

| | Sulfuric acid | Amount of resin | Eluate | BV | Concentration (mg/L) | | | | | | | | |
|---|---|---|---|---|---|---|---|---|---|---|---|---|---|
| | N | mL | mL | | Sc | Al | Fe | Ni | Mg | Mn | Cr | Ca | Co |
| First treatment | 2N | 13 | 53 | 4.1 | 45.2 | 249 | 17.6 | 15.7 | 16.5 | 28.1 | 0.66 | 3.4 | 0.7 |
| Second treatment | 2N | 11 | 46 | 4.2 | 80.8 | 454 | 31.2 | 29.0 | 29.2 | 48.7 | 1.1 | 5.7 | 1.2 |
| Sum total | 2N | 13 | 99 | 8.3 | 61.7 | 344 | 23.9 | 21.9 | 22.4 | 37.7 | 0.9 | 4.5 | 0.9 |

| | | | | | | | | | | | | | |
|---|---|---|---|---|---|---|---|---|---|---|---|---|---|
| ( 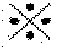 Unit is "mg/L") ( 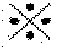 "Sum total" denotes the average concentration attained by dividing the amount of eluate obtained in the first treatment and the second treatment by the amount of solution sent) | | | | | | | | | | | | | |

**[Table 3]**

| | Sc | Al | Fe | Ni | Mg | Mn | Cr | Ca | Co |
|---|---|---|---|---|---|---|---|---|---|
| Adsorption rate | 65.6% | 7.0% | 3.3% | 23.4% | 3.1% | 3.6% | 35.1% | 3.6% | 11.6% |
| Elution rate | 73.5% | 78.2% | 71.5% | 80.8% | 71.7% | 66.5% | 58.7% | 55.4% | 81.8% |
| Recovery rate | 48.2% | 5.5% | 2.4% | 18.9% | 2.2% | 2.4% | 20.6% | 2.0% | 9.5% |
| M/Sc ratio | 1 | 5.6 | 4.3 | 1.1 | 15.9 | 7.3 | 1.5 | 1.3 | 0.2 |

| | | | | | | | | | |
|---|---|---|---|---|---|---|---|---|---|
| ( 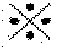 "Recovery rate" is represented by recovery rate = adsorption rate × elution rate) ( 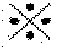 "M/Sc" denotes the concentration ratio to scandium) | | | | | | | | | |

As presented in Table 3, it has been found that scandium has been effectively recovered by performing the first ion exchange step and the first elution step. In addition, in the adsorption starting liquid of which the composition was presented in Table 1, the concentration ratio of aluminum/scandium was 144, but the concentration ratio in the eluate obtained through the first ion exchange step and the first elution step was 344/61.7 = 5.6, and the concentration ratio decreased from 144 to about 1/26 of that before the adsorption treatment. In other words, it was possible to remove aluminum by a certain proportion.

Incidentally, 5 ml of the chelating resin obtained in the first elution step and 100 ml of a sulfuric acid solution having a concentration of 3 N were mixed together in a beaker and stirred for 30 minutes and thus a treatment was performed to remove chromium adsorbed onto the chelating resin. Incidentally, the reaction temperature was set to room temperature. Thereafter, the chelating resin and the sulfuric acid solution were separated from each other by filtration. The sulfuric acid solution was partially sampled and analyzed by ICP.

### (Adjustment step)

Next, a slurry of calcium carbonate and sodium hydroxide were added to the scandium eluate (solution of sum total) obtained in the first elution step to adjust the pH to 2.0 and the ORP to -81 mV. The composition of the post-adjustment liquid obtained by adjustment is presented in Table 4.

**[Table 4]**

| | Sc | Al | Fe | Ni | Mg | Mn | Cr | Ca |
|---|---|---|---|---|---|---|---|---|
| Concentration | 55.7 | 271 | 19.7 | 23.4 | 17.3 | 30.1 | 0.94 | 5.5 |
| M/Sc ratio | 1 | 4 .9 | 0.4 | 0.4 | 0.3 | 0.5 | 0 | 0.1 |

| | | | | | | | | |
|---|---|---|---|---|---|---|---|---|
| ( 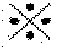 Unit is "mg/L") | | | | | | | | |

### (Second ion exchange step)

Next, the adsorption starting liquid having the composition presented in Table 4 was placed in a beaker together with a chelating resin having iminodiacetic acid as a functional group (product name: DIAION CR11, manufactured by Mitsubishi Chemical Corporation) and these were brought into contact with each other for 30 minutes while being stirred to perform ion exchange processing. Incidentally, the amount of resin was 5 ml, and the amount of adsorption starting liquid was 84 ml (BV = 17 equivalent). In addition, the reaction temperature was set to 30°C. Thereafter, the chelating resin and the post-adsorption liquid were separated from each other by filtration. The post-adsorption liquid was partially sampled and analyzed by ICP.

The measurement results on the adsorption rates of the respective elements in the second ion exchange step are presented in the following Table 5. As presented in Table 5, it has been found that scandium has been selectively adsorbed.

**[Table 5]**

| Adsorption rate of each element (%) | | | | | | | |
|---|---|---|---|---|---|---|---|
| Sc | Al | Fe | Ni | Mg | Mn | Cr | Ca |
| 92.4 | 15.5 | 13.5 | 39.3 | 6.4 | 9.0 | 18.1 | 2.2 |

### (Second elution step)

### . Aluminum elution step

Next, 5 ml of the chelating resin obtained after the adsorption treatment and 50 ml of a sulfuric acid solution having a concentration of 0.1 N were placed in a beaker, mixed together, and stirred for 30 minutes to perform an elution treatment (elution of aluminum). Incidentally, the reaction temperature was set to room temperature. After stirring, the chelating resin and the sulfuric acid solution were separated from each other by filtration. The sulfuric acid solution (eluate) was partially sampled and analyzed by ICP.

### • Scandium elution step

Subsequently, 5 ml of the chelating resin after being subjected to the elution of aluminum and 20 ml of a sulfuric acid solution having a concentration of 0.5 N were placed in a beaker, mixed together, and stirred for 30 minutes to perform an elution treatment (elution of scandium). Incidentally, the reaction temperature was set to room temperature. After stirring, the chelating resin and the sulfuric acid solution were separated from each other by filtration. The sulfuric acid solution (eluate) was partially sampled and analyzed by ICP.

The compositions of the eluate obtained by the elution treatment of aluminum (aluminum eluate) and the eluate obtained by the elution treatment of scandium (scandium eluate) are presented in the following Table 6 and the measurement results on the elution rate are collectively presented in the following Table 7.

**[Table 6]**

| | Acid concentration | Amount of resin | Eluate | Concentration (mg/L) | | | | | | | |
|---|---|---|---|---|---|---|---|---|---|---|---|
| | N | mL | mL | Sc | Al | Fe | Ni | Mg | Mn | Cr | Ca |
| Al elution | 0.1 | 5 | 50 | 21.9 | 51.1 | 0.30 | 5.2 | 0.25 | 1.03 | 0.05 | 0.38 |
| Sc elution | 0.5 | 5 | 20 | 84.2 | 7.7 | 1.28 | 2.5 | 0.14 | 0.06 | 0.01 | 0.45 |

| | | | | | | | | | | | |
|---|---|---|---|---|---|---|---|---|---|---|---|
| ( 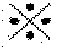 Unit is "mg/L") | | | | | | | | | | | |

**[Table 7]**

| | Acid concentration | Sc | Al | Fe | Ni | Mg | Mn | Cr | Ca |
|---|---|---|---|---|---|---|---|---|---|
| Al elution | 0.1N | 28.4% | 93.6% | 12.2% | 69.4% | 60.1% | 91.6% | 40.3% | 31.9% |
| Sc elution | 0.5N | 43.6% | 5.6% | 20.8% | 13.7% | 13.5% | 2.1% | 3.2% | 15.1% |
| Recovery rate | | 72.0 | 99.2 | 33.0 | 83.1 | 73.6 | 93.7 | 43.5 | 33.4 |
| Concentration (calculated) | | 22 | 2 | 1 | 1 | 0 | 0 | 0 | 0 |
| M/Sc ratio | | 1 | 0.1 | <0.1 | <0.1 | <0.1 | 0 | 0 | 0 |

| | | | | | | | | | |
|---|---|---|---|---|---|---|---|---|---|
| ( 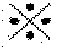 Unit of concentration is "mg/L") ( 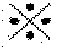 Units of elution rate and recovery rate are "%") | | | | | | | | | |

As presented in Tables 6 and 7, it can be seen that scandium can be selectively eluted by performing the elution treatment of scandium.

In addition, as presented in Table 7, the concentration ratio of aluminum to scandium was greatly decreased to 0.1 and scandium with high grade was able to be obtained. In addition, iron, magnesium, manganese and the like that were other impurities were able to be effectively decreased.

Incidentally, there is a margin in the adsorption amount by the chelating resin particularly in the second ion exchange step since it has been able to greatly decrease these impurities, and it is expected that the concentration of scandium in the scandium eluate is increased and the recovery rate of scandium is thus improved by repeatedly performing passing of the scandium eluate obtained.

### <Concentration step>

Next, sodium hydroxide was added to the scandium eluate of which the composition was presented in Table 6 to adjust and maintain the pH to from 8 to 9, and a precipitate of scandium hydroxide was thus generated. Thereafter, sulfuric acid was added to the precipitate for redissolution, and a scandium hydroxide-dissolved solution (hydroxide-dissolved solution) was thus obtained. The analysis results on the composition of the dissolution solution obtained are presented in the following Table 8. Incidentally, the analytical values of Mg, Cr, Mn, and Ca were equal to or lower than the measurable lower limits.

**[Table 8]**

| Composition of hydroxide-dissolved solution | | | | | | | | | | | | | |
|---|---|---|---|---|---|---|---|---|---|---|---|---|---|
| Sc | Al | Fe | Ni | Mg | Cr | Mn | Ti | Ca | Co | Cu | V | Zr | Zn |
| 20,000 | 11,075 | 4,241 | 689 | 0 | 0 | 0 | 161 | 0 | 55 | 2 | 18 | 3 | 1 |

| | | | | | | | | | | | | | |
|---|---|---|---|---|---|---|---|---|---|---|---|---|---|
| ( 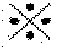 Unit is "mg/L") | | | | | | | | | | | | | |

### <Solvent extraction step>

### (Extraction step)

Next, 103 L of a dissolution solution having the same composition as that of the solution presented in Table 8 was prepared, and this was subjected to a solvent extraction treatment as an extraction starting liquid. Specifically, 2.6 L of an organic solvent prepared by adjusting di-2-ethylhexyl phosphoric acid (D2EHPA, manufactured by LANXESS) which was an acidic extractant to 13% by volume using TECLEAN N20 (manufactured by JXTG Nippon Oil & Energy Corporation) was mixed with the extraction starting liquid prepared, and the mixture was stirred at room temperature for 60 minutes to perform the extraction treatment. By this, an extracted organic phase containing scandium was obtained. Incidentally, at the time of extraction, formation of a clad was not observed and the phase separation after still standing also rapidly proceeded.

The compositions of the various kinds of elements contained in the extracted organic phase obtained were analyzed, and the values attained by dividing the amounts of the various kinds of elements contained in the extracted organic phase by the amounts of the respective elements contained in the extraction starting liquid (pre-extraction source liquid) were calculated as the extraction rates. The calculation results on the extraction rates of the respective elements are collectively presented in the following Table 9.

**[Table 9]**

| Extraction rates of various kinds of elements (%) | | | | | | | | | | | | | |
|---|---|---|---|---|---|---|---|---|---|---|---|---|---|
| Sc | Al | Fe | Ni | Mg | Cr | Mn | Ti | Ca | Co | Cu | V | Zr | Zn |
| 100 | 2 | 35 | 4 | - | - | - | 99 | - | 0 | 1 | 100 | 100 | - |

| | | | | | | | | | | | | | |
|---|---|---|---|---|---|---|---|---|---|---|---|---|---|
| ( 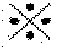 "-" indicates that it was unanalyzed or the concentration is below the lower measurement limit) | | | | | | | | | | | | | |

As presented in Table 9, almost the entire scandium contained in the pre-extraction source liquid was extracted into the extracted organic phase by the extraction treatment. In addition, elements such as aluminum, nickel, magnesium, chromium, manganese, calcium, cobalt, copper, and zinc were hardly extracted into the extracted organic phase.

### (Scrubbing (washing) step)

Next, a hydrochloric acid solution having a concentration of 6.5 mol/L was mixed with 2.6 L of the organic solvent (extracted organic phase) which contained scandium and was obtained by the extraction treatment at a proportion of 2.6 L so that the phase ratio (O/A) was a ratio of 1, and the mixture was stirred for 10 minutes and washed. After stirring, the mixture was allowed to still stand, the aqueous phase was separated, and the organic phase was again mixed with 2.6 L of a fresh hydrochloric acid solution having a concentration of 6.5 mol/L and washed, and the aqueous phase was separated in the same manner. Such a washing operation was repeated three times in total.

By washing the extracted organic phase three times in this manner, the concentration of impurity metals other than scandium eluted in the organic phase was able to be decreased to a level of 1 mg/L or less. On the other hand, the loss of scandium remained at a low level of 10 mg/L, and it was possible to effectively remove only the impurities without separating scandium extracted into the organic solvent into the aqueous phase.

### (Backward extraction step)

Next, sodium hydroxide having a concentration of 6 mol/L was mixed with the extracted organic phase after being subjected to washing so that the phase ratio O/A = 1/1, and the mixture was stirred for 20 minutes to backward extract scandium into the aqueous phase. The mixture was in a slurry state in which the precipitated solid and the liquid phase were mixed by the backward extraction treatment, and thus the solid and the liquid phase were separated from each other by filtration. The solid was washed with water to remove the organic phase and post-backward extraction liquid attached to the solid. With regard to the liquid phase, hydrochloric acid was added to the liquid phase, the mixture was stirred for 5 minutes and allowed to still stand, and the organic phase of the post-backward extraction organic solvent and the aqueous phase of the post-backward extraction liquid were separated from each other.

In addition, the compositions of various kinds of elements contained in the solid (scandium hydroxide) precipitated by the backward extraction treatment were analyzed, and the values attained by dividing the amounts of various kinds of elements contained in the solid by the amounts of various kinds of elements extracted into the organic phase in the extraction treatment in the extraction step were calculated as the recovery rates. The calculation results on the recovery rates of the respective elements are collectively presented in the following Table 10.

**[Table 10]**

| Recovery rate of each component (%) | | | | | | | | | | | | | |
|---|---|---|---|---|---|---|---|---|---|---|---|---|---|
| Sc | Al | Fe | Ni | Mg | Cr | Mn | Ti | Ca | Co | Cu | V | Zr | Zn |
| 100 | 2 | 34 | 4 | - | - | - | 96 | - | 0 | 1 | 81 | 100 | - |

| | | | | | | | | | | | | | |
|---|---|---|---|---|---|---|---|---|---|---|---|---|---|
| ( 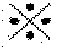 "-" indicates that it was unanalyzed or the concentration is below the lower measurement limit) | | | | | | | | | | | | | |

As presented in Table 10, it can be seen that almost the entire scandium contained in the pre-extraction source liquid was able to be recovered as a solid (scandium hydroxide) through the solvent extraction step. Furthermore, the recovered scandium hydroxide hardly contained elements such as aluminum, nickel, magnesium, chromium, manganese, calcium, cobalt, copper, and zinc, and scandium hydroxide with high grade was obtained.

### <Scandium recovery step>

### (Scandium precipitation step)

Next, hydrochloric acid was added to the solid of scandium hydroxide obtained through the backward extraction treatment, and the slurry was stirred while maintaining the pH thereof in a range of 1.0 or more and 1.5 or less to completely dissolve the solid of scandium hydroxide in hydrochloric acid, and a redissolution solution was thus obtained. Subsequently, crystals of oxalic acid dihydrate (manufactured by MITSUBISHI GAS CHEMICAL COMPANY) were added to and dissolved in the redissolution solution obtained in an amount to be two times the amount of scandium contained in the redissolution solution as the calculated amount, the mixture was stirred and mixed for 60 minutes, and a white crystalline precipitate of scandium oxalate was thus generated.

### (Roasting step)

Next, the white crystalline precipitate of scandium oxalate obtained was subjected to suction filtration, washed using pure water, and dried at 105°C for 8 hours. Subsequently, scandium oxalate was placed in a tubular furnace and maintained at from 850°C to 900°C to be roasted (fired), and scandium oxide was thus obtained.

The removal rates of the respective elements calculated based on the results attained by analyzing scandium oxide obtained by ICP are presented in Table 11.

**[Table 11]**

| Removal rate of various kinds of elements (%) | | | | | | | | | | | | | | |
|---|---|---|---|---|---|---|---|---|---|---|---|---|---|---|
| Sc | Al | Fe | Ni | Mg | Cr | Mn | Ti | Ca | Co | Cu | V | Zr | Zn | Si |
| 0 | 100 | 98.7 | 99.4 | - | - | - | 97.7 | - | - | 99.4 | 96.3 | 76.2 | - | 99.5 |

| | | | | | | | | | | | | | | |
|---|---|---|---|---|---|---|---|---|---|---|---|---|---|---|
| ( 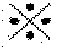 "-" indicates that it was unanalyzed or the concentration is below the lower measurement limit) | | | | | | | | | | | | | | |

As presented in Table 11, it was possible to almost completely remove impurities other than scandium, in particular, aluminum, nickel, uranium, and copper and to obtain extremely highly pure scandium oxide having a purity of higher than 99.9% as scandium oxide (Sc₂O₃).

### [Comparative Example 1]

In Comparative Example 1, an operation was performed to perform ion exchange processing only of one stage and to obtain a scandium eluate unlike in Example 1.

Specifically, 84 ml of the adsorption starting liquid which had the composition presented in Table 1 and was obtained in Example 1 and 5 ml of a chelating resin having iminodiacetic acid as a functional group the same as that in Example 1 were mixed together in a beaker and stirred for 30 minutes. Incidentally, the reaction temperature was set to room temperature. After stirring, the chelating resin and the post-adsorption liquid were separated from each other by filtration. The post-adsorption liquid was partially sampled and analyzed by ICP.

Next, 5 ml of the chelating resin after being subjected to adsorption and 50 ml of a sulfuric acid solution having a concentration of 0.1 N were placed in a beaker, mixed together, and stirred for 30 minutes to perform an elution treatment (aluminum elution step). Incidentally, the liquid temperature was maintained at room temperature. After stirring, the chelating resin and the sulfuric acid solution were separated from each other by filtration. The sulfuric acid solution (eluate) was partially sampled and analyzed by ICP.

Next, 5 ml of the chelating resin after being subjected to elution and 20 ml of a sulfuric acid solution having a concentration of 0.5 N were placed in a beaker, mixed together, and stirred at room temperature for 30 minutes to perform a treatment to elute scandium (scandium elution step). After stirring, the chelating resin and the sulfuric acid solution were separated from each other by filtration. The sulfuric acid solution (eluate) was partially sampled and analyzed by ICP.

The measurement results on the adsorption rates of the respective elements by the adsorption treatment are collectively presented in the following Table 12. In addition, the measurement results on the elution rates of the respective elements in the respective treatments in the aluminum elution step and scandium elution step are collectively presented in the following Table 12.

**[Table 12]**

| | Sc | Al | Fe | Ni | Mg | Mn | Cr | Ca |
|---|---|---|---|---|---|---|---|---|
| Adsorption rate | 65.6 | 7.0 | 3.3 | 23.4 | 3.1 | 3.6 | 35.1 | 3.6 |
| Al elution | 28.4% | 93.6% | 12.2% | 69.4% | 60.1% | 91.6% | 40.3% | 31.9% |
| Sc elution | 43.6% | 5.6% | 20.8% | 13.7% | 13.5% | 2.1% | 3.2% | 15.1% |
| Concentration (calculated) | 6 | 12 | 12 | 2 | 30 | 2 | 1 | 4 |
| M/Sc ratio | 1 | 2.0 | 2.1 | 0.3 | 5.0 | 0.4 | 0.1 | 0.6 |

| | | | | | | | | |
|---|---|---|---|---|---|---|---|---|
| ( 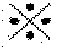 Unit of adsorption rate is "%") ( 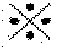 "M/Sc" denotes the concentration ratio to scandium) | | | | | | | | |

As presented in Table 12, the abundance ratio of aluminum to scandium was 2.0 and this was much higher than 0.1 that was the result by the operation in Example 1 and is presented in Table 7. It has been confirmed that it is possible to remarkably separate aluminum and scandium from each other by the ion exchange processing in the two stages performed in Example 1 and thus to increase the purity of scandium.

## Claims

1. An ion exchange processing method for separating scandium from an acidic solution containing scandium and at least aluminum as impurities, the method comprising
a first ion exchange step for bringing the acidic solution into contact with a chelating resin;
a first elution step for bringing the chelating resin, with which the acidic solution has been brought into contact in the first ion exchange step, into contact with a first eluent to obtain an eluate;
a second ion exchange step for bringing the eluate obtained into contact with a chelating resin; and
a second elution step for bringing the chelating resin, with which the eluate has been brought into contact in the second ion exchange step, into contact with a second eluent to obtain a scandium eluate containing scandium.

2. A scandium recovery method for recovering scandium from an acidic solution containing scandium and at least aluminum as impurities, the method comprising a treatment step including
a first ion exchange step for bringing the acidic solution into contact with a chelating resin;
a first elution step for bringing the chelating resin, with which the acidic solution has been brought into contact in the first ion exchange step, into contact with a first eluent to obtain an eluate;
a second ion exchange step for bringing the eluate obtained into contact with a chelating resin; and
a second elution step for bringing the chelating resin, with which the eluate has been brought into contact in the second ion exchange step, into contact with a second eluate to obtain a scandium eluate containing scandium.

3. The scandium recovery method according to claim 2, further comprising an adjustment step for adjusting a pH and a redox potential of the eluate obtained in the first elution step by adding an alkali and a reducing agent to the eluate, wherein a post-adjustment liquid obtained in the adjustment step is subjected to the second ion exchange step to be brought into contact with the chelating resin.

4. The scandium recovery method according to claim 2 or 3, wherein the first eluent to be brought into contact with the chelating resin is a sulfuric acid solution having a concentration of 0.3 N or more and less than 3 N in the first elution step.

5. The scandium recovery method according to any one of claims 2 to 4, wherein in the second elution step,
two kinds of sulfuric acid solutions having different concentrations are used as a second eluent,
a first sulfuric acid solution having a concentration of 0.01 N or more and 0.1 N or less is brought into contact with the chelating resin to obtain an aluminum eluate containing aluminum, and
the chelating resin after being subjected to an elution treatment using the first sulfuric acid solution is then brought into contact with a second sulfuric acid solution having a concentration of 0.3 N or more and 20 N or less to obtain a scandium eluate containing scandium.

6. The scandium recovery method according to claim 3, wherein amounts of alkali and reducing agent added to the eluate are adjusted so that a pH is in a range of 1.8 or more and 2.2 or less and a redox potential is in a range of from - 80mV to -120mV as a value measured using a silver/silver chloride electrode as a reference electrode in the adjustment step.

7. The scandium recovery method according to any one of claims 2 to 6, wherein the chelating resin is a chelating resin having iminodiacetic acid as a functional group.

8. The scandium recovery method according to any one of claims 2 to 7, wherein a sulfuric acid solution having a concentration of more than 3 N and 20 N or less is brought into contact with a chelating resin after being subjected to an elution treatment in the first elution step to remove chromium adsorbed on the chelating resin.

9. The scandium recovery method according to any one of claims 2 to 8, wherein the acidic solution is a post-sulfurization liquid obtained after subjecting a leachate obtained by high pressure acid leaching of nickel oxide ore to a neutralization treatment, adding a sulfurizing agent to a post-neutralization liquid obtained to generate a sulfide of nickel and/or cobalt, and separating the sulfide from the leachate.

10. The scandium recovery method according to any one of claims 2 to 9, comprising a concentration step for generating a precipitate containing scandium from a scandium eluate obtained in the second elution step and dissolving the precipitate in an acid to obtain a scandium concentrate.

11. The scandium recovery method according to claim 10, comprising a solvent extraction step for bringing a scandium concentrate obtained in the concentration step into contact with an extractant for solvent extraction.

12. The scandium recovery method according to claim 11, comprising a scandium oxide recovery step for adding a neutralizing agent or oxalic acid to a scandium-containing solution obtained in the solvent extraction step to generate a solid substance of scandium and heating the solid substance of scandium to obtain scandium oxide.
